# EUROPÄISCHE PATENTANMELDUNG

(11) **EP 1 335 259 A1**
(43) Veröffentlichungstag der Anmeldung: **13.08.2003**
(21) Anmeldenummer: 03001989.7
(22) Anmeldetag: 31.01.2003
(51) Int. Cl.: G05D 16/20, G05D 16/06

(54) **Gasdruckregler zur Regelung eines Druckes eines Gases**

(30) Priorität: 06.02.2002 DE 10204746
(71) Anmelder: ROBERT BOSCH GMBH, 70442 Stuttgart (DE)
(72) Erfinder: Bantleon, Guenther, 71229 Leonberg (DE); Nguyen-Schaefer, Thanh-Hung, 71679 Asperg (DE); Kroeger, Kai, 70372 Stuttgart (DE)

(57) **Zusammenfassung**

Die vorliegende Erfindung betrifft einen Gasdruckregler (1) zur Regelung eines Gasdrucks, insbesondere in einem gasbetriebenen Fahrzeug, umfassend ein Gehäuse (2) mit einem Einlass (3) und Auslass (4) sowie einen im Strömungsweg zwischen dem Einlass (3) und dem Auslass (4) angeordneten Niederdruckraum (5). Eine Ventilanordnung (6) mit einem Schließkörper (8) kann einen Dichtsitz (19) zur Regelung des Gasdruckes mehr oder weniger freigeben bzw. verschließen. Im Niederdruckraum (5) ist eine Membran (10) angeordnet, welche mit Druck aus dem Niederdruckraum (5) beaufschlagt wird. Eine erstes Mittel (11) dient zur Vorspannung der Membran (10). Weiterhin ist mindestens ein weiteres Mittel (12) zur Änderung der Vorspannung der Membran (10) vorgesehen. Zur Betätigung des Schließkörpers ist dieser mit der Membran oder dem weiteren Mittel verbunden.

## Beschreibung

### Stand der Technik

Die vorliegende Erfindung betrifft einen Gasdruckregler zur Regelung eines Druckes eines Gases, insbesondere für ein gasbetriebenes Fahrzeug.

In jüngster Zeit werden verstärkt Forschungen an Kraftfahrzeugen durchgeführt, welche an Stelle von Benzin bzw. Diesel mit einem alternativen Kraftstoff wie beispielsweise Erdgas (CNG (Compressed Natural Gas)) oder Wasserstoff, z.B. für Brennstoffzellen-Kraftfahrzeuge, betrieben werden. Derartige Fahrzeuge werden nachfolgend als gasbetriebene Fahrzeuge bezeichnet. Für diese gasbetriebenen Fahrzeuge ist eine Steuerung des Arbeitsdruckes des Gases notwendig, welcher von den Betriebsbedingungen des Fahrzeugs abhängig ist. Dabei muss ein höherer Versorgungsdruck aus einem Vorratsbehälter reduziert werden und auf einen vorgegebenen Arbeitsdruck geregelt werden. Da sich der Arbeitsdruck des Gases abhängig von den Betriebsbedingungen hoch-dynamisch ändert, muss ein dynamischer Druckregler für das Gas vorgesehen werden.

### Vorteile der Erfindung

Der erfindungsgemäße Gasdruckregler mit den Merkmalen des Patentanspruchs 1 ermöglicht es, dass ein Arbeitsdruck des Gases von einem sich auf einem höheren Druckniveau befindlichen Versorgungsdruck reduziert und nach einem beliebigen zeitlichen Verlauf, abhängig von den jeweiligen Betriebsbedingungen, geregelt werden kann. Der erfindungsgemäße Gasdruckregler umfasst dabei einen zwischen einem Einlass und einem Auslass vorgesehenen Strömungsweg, in welchem ein Niederdruckraum angeordnet ist. Weiterhin ist eine Ventilanordnung mit einem Schließkörper vorgesehen, welcher einen Durchlass bzw. Dichtsitz vom Einlass zum Niederdruckraum mehr oder weniger freigeben bzw. verschließen kann. Eine Membran ist in dem Niederdruckraum angeordnet, sodass sie mit dem Druck des Niederdruckraums beaufschlagt wird. Die Membran ist mittels eines ersten Mittels vorgespannt und wenigstens ein weiteres Mittel ist zur Änderung der Vorspannung der Membran vorgesehen. Dadurch kann eine auf die Membran wirkende Gegenkraft, welche durch das erste Mittel aufgebracht wird, durch Betätigung des weiteren Mittels geändert werden. Der Schließkörper ist mit der Membran oder dem weiteren Mittel verbunden, sodass sich bei einer Bewegung der Membran gleichzeitig auch der Schließkörper bewegt, um eine Druckregelung am Dichtsitz auszuführen. Der erfindungsgemäße Gasdruckregler ist somit sehr einfach aufgebaut und kann sehr kostengünstig hergestellt werden. Selbst bei einem Ausfall des weiteren Mittels kann der erfindungsgemäße Gasdruckregler eine passive Druckregelung ausführen. Somit stellt der erfindungsgemäße Gasdruckregler gleichzeitig auch einen Notbetrieb bereit, sodass bei einem Ausfall der Regelungseinrichtung eine Gasdruckregelung weiter durchgeführt werden kann, sodass das gasbetriebene Fahrzeug zumindest seine Fahrt aus eigener Kraft fortsetzen kann.

Um einen einfachen und kostengünstigen Aufbau bereitzustellen, ist das erste Mittel vorzugsweise eine Feder.

Weiterhin bevorzugt ist das weitere Mittel eine Magnetspule, insbesondere zur Änderung der Federkraft der Feder. Somit kann die Kraft zur Vorspannung der Membran durch Ansteuerung der Magnetspule einfach geändert werden.

Somit bevorzugt umfasst das weitere Mittel einen in der Magnetspule angeordneten Magnetanker.

In einer weiteren bevorzugten. Ausgestaltung der vorliegenden Erfindung ist der mit der Membran verbundene Magnetanker in der Magnetspule angeordnet und der Schließkörper der Ventilanordnung ist mit dem Magnetanker und/oder der Membran fest verbunden. Somit ist es möglich, dass selbst bei einem Ausfall der Regelungseinrichtung, z. B. auf Grund eines elektrischen Problems, der erfindungsgemäße Gasdruckregler auch bei stromlosem Zustand der Magnetspule eine passive Druckregelung ausführen kann.

Um eine Vereisung am Dichtsitz des Gasdruckreglers zu verhindern, ist vorzugsweise ein Wärmetauscher in der Nähe des Dichtsitzes eingebaut. Auf Grund der Zunahme der Gasgeschwindigkeit am Dichtsitz (Überschall) nimmt dort der Druck und die Temperatur des Gases drastisch ab. Hierdurch kann eine Vereisung auftreten, falls das Gas befeuchtet ist. Eine derartige Vereisung kann durch den Wärmetauscher verhindert werden.

Vorzugsweise ist zwischen dem Dichtsitz und dem Niederdruckraum ein rohrförmiges Element angeordnet. Durch dieses rohrförmige Element können die durch die Überschallströmung (ca. 2 bis 3 Mach) des Gases nach dem Dichtsitz auftretenden Druckstöße abgefangen werden. Weiterhin ermöglicht das rohrförmige Element eine Reduzierung der Geräusche an dem Dichtsitz.

Vorteilhaft weist das rohrförmige Element eine Länge auf, welche größer als der Durchmesser des Dichtsitzes, d.h. der Durchmesser des rohrförmigen Elements ist. Besonders bevorzugt ist die Länge dabei 10 bis 20 mal größer als der Durchmesser des Dichtsitzes. Dabei kann ein besonders leiser Gasdruckregler bereitgestellt werden und Druckstöße sicher verhindert werden.

Gemäß einer weiteren bevorzugten Ausgestaltung der vorliegenden Erfindung ist die Fläche der Membran im Niederdruckraum ca. 10 bis 15 mal größer als der Durchmesser des Dichtsitzes.

Um die Federkraft der Feder sowohl zu reduzieren als auch verstärken zu können, sind vorzugsweise zwei Magnetspulen vorgesehen. Somit kann der Druck im Niederdruckraum gemäß einem vorgegebenen zeitlichen Verlauf beliebig geregelt werden und jeweils ein optimaler Druck für die gerade herrschenden Betriebsbedingungen bereitgestellt werden. Weiterhin wird dadurch ein Einfluss von Änderungen des Versorgungsdruckes auf den Arbeitsdruck deutlich reduziert.

Damit der erfindungsgemäße Gasdruckregler in einfacher Weise, insbesondere an Fahrzeuge unterschiedlicher Hersteller, anpassbar ist, ist die Federkraft der Feder vorzugsweise einstellbar. Dies kann besonders bevorzugt mittels einer auf die Feder wirkenden Einstellschraube ermöglicht werden, welche von außerhalb des Gehäuses betätigbar ist.

Um einen besonders kompakten Aufbau aufzuweisen, ist der Dichtsitz der Ventilanordnung vorzugsweise an dem von dem Membran fortgerichteten Ende des rohrförmigen Elements angeordnet. Besonders bevorzugt weist dabei der Schließkörper der Ventilanordnung eine Stange auf, welche durch das rohrförmige Element hindurchgeführt ist. Um die Stange dabei im rohrförmigen Element zu führen, ist bevorzugt eine Führungsvorrichtung vorgesehen. Besonders bevorzugt ist die Führungseinrichtung dabei als Manschette ausgebildet. Hierbei fungiert die Manschette neben der Führung der Stange auch noch zum Schutz der Stange, da im rohrförmigen Element bzw. am Dichtsitz Geschwindigkeiten von ca. 2 bis 3 Mach auftreten.

Vorzugsweise wird der erfindungsgemäße Gasdruckregler in einem mit Erdgas (CNG) betriebenen Fahrzeug verwendet, oder in einem Fahrzeug, welches eine gasbetriebene Brennstoffzelle aufweist. Bei einem Brennstoffzellenfahrzeug wird dabei als Gas üblicherweise Wasserstoff verwendet. Weiterhin kann bei einem Brennstoffzellenfahrzeug vorteilhaft der Wärmetauscher am Dichtsitz des Gasdruckreglers mit Abwärme aus der Brennstoffzelle betrieben werden. Weiterhin wird bei einem Brennstoffzellenfahrzeug der Gasdruck des Wasserstoffs vorzugsweise in Abhängigkeit von dem Druck eines ersten Gases (üblicherweise Sauerstoff) geregelt.

Die Drücke bei den gasbetriebenen Fahrzeugen betragen vorzugsweise ca. 200 bis 300 bar als Versorgungsdruck, welcher mittels des Gasdruckreglers auf ca. 8 bis 10 bar als Arbeitsdruck geregelt wird.

### Zeichnungen

Zwei Ausführungsbeispiele der Erfindung werden in der nachfolgenden Beschreibung näher erläutert.

Es zeigen:
- Figur 1: einen Gasdruckregler gemäß einem ersten Ausführungsbeispiel der vorliegenden Erfindung, und
- Figur 2: einen Gasdruckregler gemäß einem zweiten Ausführungsbeispiel der vorliegenden Erfindung.

### Beschreibung der Ausführungsbeispiele

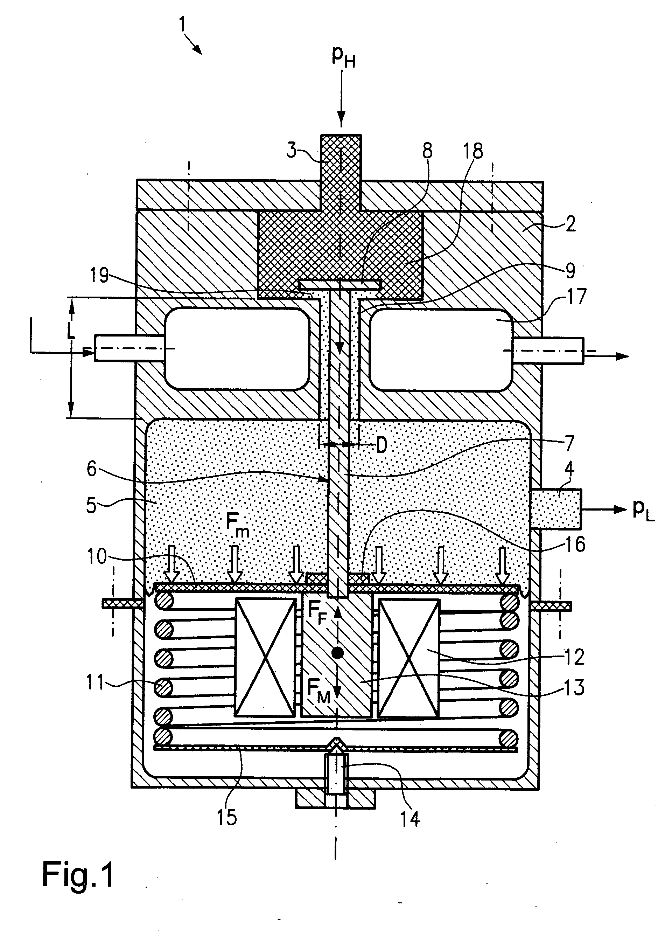

Figur 1 zeigt eine Schnittansicht eines Gasdruckreglers 1 gemäß einem ersten Ausführungsbeispiel der vorliegenden Erfindung.

Wie in Figur 1 gezeigt, umfasst der Gasdruckregler 1 ein Gehäuse 2, in welchem ein Einlass 3 und ein Auslass 4 vorgesehen ist. Ein Strömungsweg ist zwischen dem Einlass 3 und dem Auslass 4 definiert. Im Strömungsweg ist nach dem Einlass 3 ein Hochdruckraum 18 ausgebildet, welcher über ein Rohr 9 mit einem Niederdruckraum 5 verbunden ist. Ausgehend vom Niederdruckraum 5 verläuft der Strömungsweg zum Auslass 4.

Der Gasdruckregler 1 umfasst weiterhin eine Ventilanordnung 6, welche aus einer Stange 7 und einer Ventilplatte 8 besteht. Die Ventilplatte 8 dient dabei zum Verschließen bzw. mehr oder weniger Freigeben eines Dichtsitzes 19, welcher zwischen dem Hochdruckraum 18 und dem Rohr 9 ausgebildet ist. Wie in Figur 1 gezeigt, ist die Stange 7 der Ventilanordnung 6 durch das Rohr 9 geführt.

Der Niederdruckraum 5 steht mit einer Membran 10 in Verbindung, welche mittels einer Feder 11 in Richtung des Niederdruckraumes 5 vorgespannt ist. Die Stange 7 der Ventilanordnung 6 steht mit einem Magnetanker 13 in Verbindung, welcher innerhalb einer Magnetspule 12 angeordnet ist. Wie in Figur 1 gezeigt, ist die Magnetspule 12 bzw. der Magnetanker 13 im inneren der als Schraubenfeder ausgebildeten Feder 11 angeordnet. Es sei angemerkt, dass selbstverständlich an Stelle der Schraubenfeder auch ein anderes geeignetes Federelement wie z. B. eine Blattfeder o.ä. verwendet werden kann.

Zur Stabilisierung der Stange 7 an der Membran 10 ist eine Lochscheibe 16 vorgesehen. Weiterhin ist die Stange 7 mittels einer nicht dargestellten Führungseinrichtung im Rohr 9 geführt, um eine seitliche Bewegung der Stange 7 zu verhindern.

Die Vorspannkraft der Feder 11 kann über eine als Madenschraube ausgebildete Einstellschraube 14, welche auf eine mit der Feder 11 in Verbindung stehende Vorspannplatte 15 drückt, eingestellt werden.

Weiterhin ist am Rohr 9 ein Wärmetauscher 17 in der Nähe des Dichtsitzes 19 angeordnet, um eine Vereisung auf Grund der Zunahme der Geschwindigkeit auf Überschallgeschwindigkeit am Dichtsitz 19 zu verhindern.

Wie in Figur 1 gezeigt, weist das rohrförmige Element 9 eine Länge L auf, welche ca. 10 bis 12 mal größer als der Durchmesser D des Rohres 9 ist. Dadurch wird die Geräuschentwicklung am Dichtsitz 19 infolge der Drosselung deutlich reduziert und weiterhin können im Rohr 9 die durch die Überstrahlströmung des Gases nach dem Dichtsitz 19 auftretenden Druckstöße abgefangen werden.

Nachfolgend wird die Funktion und Wirkungsweise des erfindungsgemäßen Gasdruckreglers 1 beschrieben. Zuerst wird die Federkraft der Feder 11 bei einem stromlosen Zustand der Magnetspule 12, basierend auf einem Kraftausgleich zwischen dem Versorgungsdruck p_{H}, dem Arbeitsdruck p_{L} und dem Umgebungsdruck mittels der Einstellschraube 14 eingestellt. Erfindungsgemäß erfolgt eine Regelung des Versorgungsdruckes p_{H} durch eine Änderung der durchströmten Querschnittsfläche am Dichtsitz 19. Wenn der Versorgungsdruck p_{H} einen vorgegebenen Druck überschreitet, nimmt die wirkende Kraft Fₘ auf die Membran 10 entgegen der Federkraft F_{F} zu, wodurch der Dichtsitz 19 durch die Ventilplatte 8 verschlossen wird. Durch den Verbrauch des Gases baut sich der Druck P_{L} im Niederdruckraum 5 wieder ab. Unterschreitet nun der Druck P_{L} im Niederruckraum einen vorgegebenen Druckwert, lässt die wirkende Kraft Fₘ auf die Membran 10 nach, wodurch die Ventilanordnung 6 wieder nach oben bewegt wird und der Dichtsitz 19 freigegeben bzw. mehr geöffnet wird. Der höhere Versorgungsdruck p_{H} wird am Dichtsitz 19 dadurch in geringerem Umfang gedrosselt, sodass der Druck P_{L} im Niederdruckraum 5 wieder zunimmt.

Wenn nun der Druck P_{L} im Niederdruckraum 5 nach einem vorgegebenen Zeitlauf geregelt werden soll, wird die Magnetspule 12 angesteuert, sodass die resultierende Federkraft der Feder 11 geändert werden kann. Vorzugsweise wird bei Verwendung von genau einer Magnetspule 12 die Federkraft F_{F} der Feder 11 derart geändert, dass sie durch die Kraft F_{M}, basierend auf der Magnetspule 12, reduziert wird (vgl. Figur 1).

Somit kann mittels des erfindungsgemäßen Druckreglers 1 ein beliebiger zeitlicher Verlauf der Druckhöhe durch Ansteuerung der Magnetspule 12 geregelt werden. Weiterhin ermöglicht der erfindungsgemäße Gasdruckregler auch einen Notbetrieb bei einem stromlosen Zustand der Magnetspule 12, wobei eine Druckregelung im Niederdruckraum 5 ausschließlich mittels der Federkraft F_{F} der Feder 11 erfolgt.

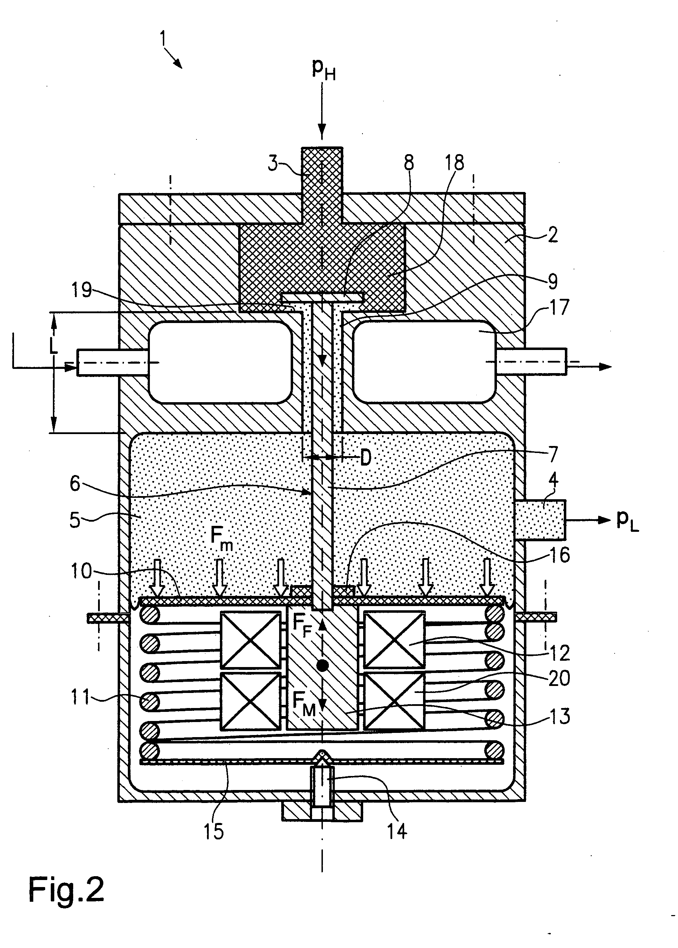

Nachfolgend wird unter Bezugnahme auf Figur 2 ein Gasdruckregler 1 gemäß einem zweiten Ausführungsbeispiels der vorliegenden Erfindung beschrieben. Dabei wurden gleiche bzw. funktional gleiche Teile mit den gleichen Bezugszeichen wie im ersten Ausführungsbeispiel bezeichnet.

Wie aus Figur 2 ersichtlich ist, entspricht der Gasdruckregler 1 des zweiten Ausführungsbeispiels im Wesentlichen dem des ersten Ausführungsbeispiels. Im Unterschied zum ersten Ausführungsbeispiel sind jedoch an Stelle einer Magnetspule zwei Magnetspulen 12 und 20 vorgesehen. Durch das Vorsehen von zwei Magnetspulen 12 und 20 ist es möglich, dass eine Druckregelung im Niederdruckraum 5 dahingehend erfolgt, dass die Federkraft F_{F} der Feder 11 sowohl reduziert als auch verstärkt werden kann. Dadurch kann eine noch genauere Regelung des Arbeitsdrucks P_{L} ermöglicht werden. Ansonsten entspricht der Gasdruckregler des zweiten Ausführungsbeispiels dem des ersten Ausführungsbeispiels, sodass auf die oben gegebene Beschreibung verwiesen werden kann.

Somit betrifft die vorliegende Erfindung einen Gasdruckregler 1 zur Regelung eines Gasdrucks, insbesondere in einem gasbetriebenen Fahrzeug, umfassend ein Gehäuse 2 mit einem Einlass 3 und Auslass 4 sowie einen im Strömungsweg zwischen dem Einlass 3 und dem Auslass 4 angeordneten Niederdruckraum 5. Eine Ventilanordnung 6 mit einem Schließkörper 8 kann einen Dichtsitz 19 zur Regelung des Gasdruckes mehr oder weniger freigeben bzw. verschließen. Im Niederdruckraum 5 ist eine Membran 10 angeordnet, welche mit Druck aus dem Niederdruckraum 5 beaufschlagt wird. Ein erstes Mittel 11 dient zur Vorspannung der Membran 10. Weiterhin ist mindestens ein weiteres Mittel 12 zur Änderung der Vorspannkraft F_{F} des ersten Mittels 11 vorgesehen. Zur Betätigung des Schließkörpers ist dieser mit der Membran 10 oder dem weiteren Mittel 12 verbunden.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Gasdruckregler, insbesondere für ein gasbetriebenes Fahrzeug, umfassend ein Gehäuse (2) mit einem über einen Strömungsweg miteinander verbundenen Einlass (3) und einem Auslass (4), einem im Strömungsweg angeordneten Niederdruckraum (5), einer Ventilanordnung (6) mit einem Schließkörper (8), welcher einen Dichtsitz (19) zwischen dem Einlass (3) und dem Niederdruckraum (5) mehr oder weniger freigeben oder verschließen kann, einer im Niederdruckraum (5) angeordneten Membran (10), welche mit Druck aus dem Niederdruckraum (5) beaufschlagt wird, einem ersten Mittel zur Vorspannung der Membran (10) und mindestens einem weiteren Mittel zur Änderung der Vorspannung der Membran, wobei der Schließkörper (8) der Ventilanordnung (6) mit dem weiteren Mittel und/oder der Membran (10) fest verbunden ist.

2. Gasdruckregler nach Anspruch 1, **dadurch gekennzeichnet, dass** das erste Mittel eine Feder (11) ist.

3. Gasdruckregler nach Anspruch 1 oder 2, **dadurch gekennzeichnet, dass** das weitere Mittel eine Magnetspule, insbesondere zur Änderung der Federkraft (F_{F}) der Feder (11) ist.

4. Gasdruckregler nach einem der vorangehenden Ansprüche, **dadurch gekennzeichnet, dass** das weitere Mittel einen in einer Magnetspule angeordneten Magnetanker umfasst.

5. Gasdruckregler nach einem der vorangehenden Ansprüche, **dadurch gekennzeichnet, dass** ein mit der Membran (10) verbundener Magnetanker (13) in der Magnetspule (12) angeordnet ist und der Schließkörper (8) der Ventilanordnung (6) mit dem Magnetanker (13) und/oder der Membran (10) fest verbunden ist.

6. Gasdruckregler nach einem der Ansprüche 1 bis 5, **dadurch gekennzeichnet, dass** ein Wärmetauscher (17) in der Nähe des Dichtsitzes (19) angeordnet ist, um eine Vereisung am Dichtsitz (19) zu verhindern.

7. Gasdruckregler nach einem der Ansprüche 1 bis 6, **dadurch gekennzeichnet, dass** zwischen dem Dichtsitz (19) und dem Niederdruckraum (5) ein rohrförmiges Element (9) angeordnet ist.

8. Gasdruckregler nach Anspruch 7, **dadurch gekennzeichnet, dass** das rohrförmige Element (9) eine Länge (L) aufweist, welche größer als ein Durchmesser (D) des Dichtsitzes (19) ist.

9. Gasdruckregler nach einem der Ansprüche 1 bis 8, **dadurch gekennzeichnet, dass** eine Fläche der Membran (10) ungefähr 10 bis 15 mal größer als der Durchmesser (D) des Dichtsitzes (19) ist.

10. Gasdruckregler nach einem der Ansprüche 3 bis 9, **dadurch gekennzeichnet, dass** eine zweite Magnetspule (20), insbesondere zur Änderung der Federkraft (F_{F}) der Feder (11) vorgesehen ist.

11. Gasdruckregler nach einem der Ansprüche 2 bis 10, **dadurch gekennzeichnet, dass** die Federkraft (F_{F}) der Feder (11) einstellbar ist.

12. Gasdruckregler nach einem der Ansprüche 7 bis 11, **dadurch gekennzeichnet, dass** der Dichtsitz (19) an einem von der Membran (10) fortgerichteten Ende des rohrförmigen Elements (9) angeordnet ist.

13. Gasdruckregler nach Anspruch 12, **dadurch gekennzeichnet, dass** die Ventilanordnung (6) eine mit dem Schließkörper (8) verbundene Stange (7) aufweist, welche durch das rohrförmige Element (9) hindurch angeordnet ist.

14. Gasdruckregler nach Anspruch 13, **dadurch gekennzeichnet, dass** eine Führungsvorrichtung vorgesehen ist, um die Stange (7) im rohrförmigen Element (9) zu führen.

15. Gasdruckregler nach einem der Ansprüche 1 bis 14, **dadurch gekennzeichnet, dass** der Gasdruckregler in einem gasbetriebenen Fahrzeug verwendet wird, wobei das gasbetriebene Fahrzeug eine mit zwei unterschiedlichen Gasen betriebene Brennstoffzelle als Antrieb aufweist, und wobei der Gasdruckregler den Druck des einen Gases in Abhängigkeit vom Druck des anderen Gases regelt.

16. Gasdruckregler nach einem der Ansprüche 6 bis 15, **dadurch gekennzeichnet, dass** der Gasdruckregler in einem gasbetriebenen Fahrzeug verwendet wird, wobei das gasbetriebene Fahrzeug eine gasbetriebene Brennstoffzelle als Antrieb aufweist, und wobei der Wärmetauscher (17) mit Abwärme aus der Brennstoffzelle betrieben wird, oder dass das gasbetriebene Fahrzeug mit Erdgas oder Wasserstoff betrieben wird.
